# EUROPEAN PATENT APPLICATION

(11) **EP 1 624 165 A1**
(43) Date of publication of application: **08.02.2006**
(21) Application number: 04425616.2
(22) Date of filing: 05.08.2004
(51) Int. Cl.: F01N 3/28, B01D 53/94, B01J 23/42, B01J 23/44, B01J 23/46, B01J 35/06, B01J 21/08

(54) **Device for reducing polluting substances present in exhaust gases of an internal-combustion engine**

(71) Applicant: Pellegrino, Luigi, 10090 Rivalba (IT)
(72) Inventor: Pellegrino, Luigi, 10090 Rivalba (IT); Tenci, Pierluigi, 10100 Torino (IT)
(74) Representative: Lotti, Giorgio

(57) **Abstract**

The present invention relates to a device (1) for reducing polluting substances present in exhaust gases of an internal-combustion engine. The device (1) comprises a cylindrical case (2) provided with an inlet (3) and with an outlet (4) for the exhaust gases, and a catalyser cartridge (5) housed in said case (2), between said inlet (3) and said outlet (4), and traversed, in use, by the exhaust gases. The catalyser cartridge (5) is constituted by silica fibre with purity of at least 99% obtained directly by melting highly pure SiO₂, catalysed with iridium in combination with platinum and/or palladium.

## Description

The present invention relates to a device for reducing polluting substances present in the exhaust gases of an internal combustion engine, with Diesel cycle, installed on motor vehicles, such as motor cars, lorries, buses, earth moving machines, forklift trucks, or in fixed installations, such as electrical generator sets and co-generation plants.

It is well known that the exhaust gases produced by Diesel engines contain numerous harmful substances, such as unburnt hydrocarbons, carbon particulate, nitrogen and carbon oxides, elements - such as Calcium, Potassium, Magnesium, Molybdenum, Sulphur, Zinc and Phosphorus contained in the engine lubrication oil, and sulphur, which may also be contained in the fuel oil.

In particular, alkaline earthly metals, such as calcium, contained in lubricating oil, poisons the device for reducing polluting substances and considerably reduces the efficiency of the catalysis of the device itself, which essentially comprises a cartridge of silica fibre whereon are plated catalysing elements such as platinum and/or palladium. In addition to delaying the catalysis kinetics, the presence of alkaline earthly metals partly oxidised by platinum, contaminate the silica fibre, favouring its deglassification over time.

Among the polluting substances present in exhaust gases, those most sensitive to catalyser poisoning are unburnt hydrocarbons, whose conversion into CO₂ and H₂O is insufficient, with the consequent accumulation of the condensable fractions of these hydrocarbons on the silica fibre.

The accumulation of hydrocarbons in the silica fibre of the catalyser cartridge is deleterious also because it can cause an uncontrolled self ignition which develops and propagates in the space where the accumulation in question originated. In these conditions, the temperature inside the cartridge can reach the melting point of silica (about 1700°C) and of the supports elements thereof, with the consequent destruction of the affected area.

Technical solutions to contain the effects of said drawbacks are known; for example, one could mention the device described in the European patent EP-B-0 340 078. Said device comprises a cylindrical case having an inlet and an outlet for the exhaust gases, and a cylindrical tubular cartridge housed inside the case, between the inlet and the outlet. The cartridge comprises a basket formed by two coaxial cylindrical tubular bodies of rigid mesh, respectively internal and external, between which is interposed a tubular mat containing catalysed mineral fibres.

The exhaust gases produced by the internal combustion engine are injected into the cartridge, which is radially traversed by expansion, and are thus purified by the mineral fibres and subsequently conveyed towards the outlet of the device.

Although the device described in the aforementioned patent has allowed to obtain good results in terms of efficiency and reliability, it has been observed that said device is not totally able to prevent the poising of the noble metals by the calcium and the consequent accumulation of the hydrocarbons, especially under operating conditions in which on average the temperature of the exhaust gases is low, for example below the catalysis threshold 200°C-250°C. For this reason, the risk of self-ignition due to accumulation is high and consequently the working life of the catalyser device can be compromised prematurely.

Therefore the object of the present invention is to provide a solution that i) allows the catalysis of carbon monoxide and of the unburnt hydrocarbons to start at relatively low engine operating temperatures (in the order of 200°C) and ii) has the ability to oxidise the carbon particulate starting from the temperature of about 150°C, in order to eliminate the risk of agglomeration between the carbon and the hydrocarbons that transit in the fibrous mass of the silica cartridge.

An additional object of the present invention is to provide a solution that prevents the hydrocarbon accumulation which may also take place when the temperature of the exhaust gases drops between 240°C and 160°C, for example when the engine is decelerating and reducing the delivered power. For example in applications in urban buses, these types of temperature oscillations are very frequent and have an impact on the operating time of the entire life cycle of the vehicle in question and of its device for reducing polluting substances.

The device according to the present invention also has the great functional advantage given by the ability completely to convert the carbon fraction of the particulate into CO and subsequently into CO₂ in the absence of NO₂. This aspect offers an additional advantage from the environmental viewpoint, not release into the atmosphere a compound that is considered harmful for health.

According to the present invention, said objects are achieved by a device having the characteristics specifically set out in the appended claims.

More specifically, the device of the present invention is constituted by a case provided with an inlet and an outlet for the exhaust gases, a catalyser cartridge made of silica fibre with purity equal to or higher than 99%, obtained by directly melting highly pure SiO₂, catalysed with iridium in combination with platinum and/or palladium, housed inside the case.

Without intending to be constrained by a specific theory in this regard, the Applicant has reason to believe that silica fibre with a purity value equal to or higher than 99% obtained by directly melting highly pure SiO₂ has the chemical stability that is indispensable to guarantee over time the exchange between adsorbed oxygen and the carbon present in the exhaust gas. Therefore, silica is deemed to perform the role of activator of the oxidation of carbon to CO in the absence of NO₂, CO which is subsequently oxidised to CO₂ by the platinum and/or palladium plated on the fibre itself.

Iridium allows platinum and palladium to operate in full catalysis efficiency even at low operating temperatures, e.g. near 200°C as stated above and to prevent hydrocarbon accumulation during the deceleration and temperature drop of the gaseous flow. All this even in the presence of alkaline earthly metals and of the other chemical elements described above contained in the exhaust gas and coming from the lubricating oil of the engine.

For a better understanding of the present invention, a preferred embodiment shall now be described, purely by way of non limiting example and with reference to the accompanying figure, which shows a longitudinal section of a device for reducing polluting substances according to the present invention.

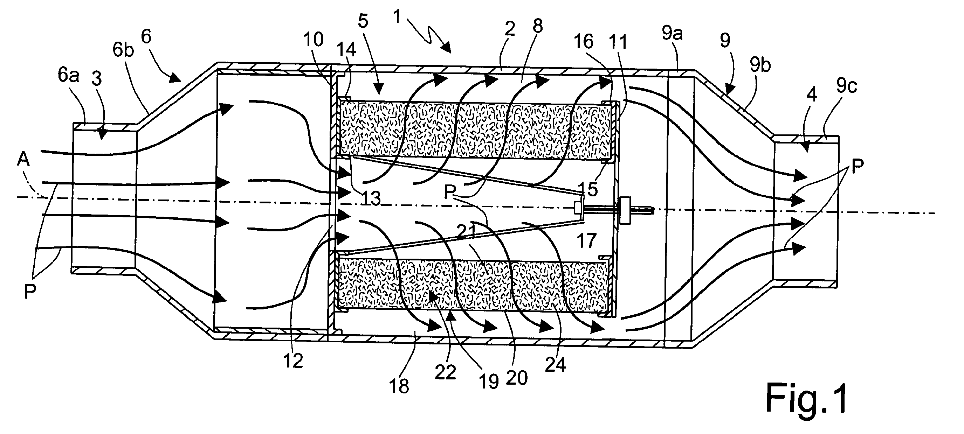

In Figure 1 is shown, and globally designated by the reference number 1, a device for reducing polluting substances present in the exhaust gases of an internal combustion engine according to the present invention.

The device 1 comprises a hollow, substantially cylindrical case 2 with axis A provided, at the opposite axial ends, with an inlet 3 and with an outlet 4 for the exhaust gases, both with circular section, and a catalyser cartridge having tubular, cylindrical or elliptic, mounted coaxially inside the case 2 between the inlet and outlet 3,4.

The case 2 is essentially formed by three hollow bodies that are axially coupled to each other: a first end body 6, substantially funnel shaped, an intermediate body 8 with substantially cylindrical shape within which is positioned the catalyser cartridge 5, and a second end body 9, also substantially funnel shaped.

In particular, the first end body 6 comprises a first portion 6a with substantially cylindrical shape defining the inlet 3 of the device 1, a second portion 6b with substantially cone frustum shape extending integrally from the first portion 6a and having growing diameter starting from the first portion 6a itself; and a third portion 6c with substantially cylindrical shape extending integrally from the second portion 6b and on the extension whereof extends the intermediate body 8.

The second end body 9 instead comprises a first portion 9a with substantially cylindrical shape extending on the extension of the intermediate body 8, a second portion 9b with substantially cone frustum shape extending integrally from the first portion 9a and having decreasing diameter starting from the first portion 9a itself, and a third portion 9c with substantially cylindrical shape extending integrally from the second portion 9b and defining the outlet 4 of the device 1.

The catalyser cartridge 5 is held axially and radially in working position inside the intermediate body 8 by means of a pair of caps 10, 11 positioned at the opposite ends of the catalyser cartridge 5.

In particular, the cap 10 is mounted coaxially in sealed fashion between the first end body 6 and the intermediate body 8, is provided with a central through hole 12 whose diameter substantially coincides with the inner diameter of the catalyser means 5 to allow the passage of the exhaust gases from the first inlet body 6 into the catalyser means 5, and coaxially supports in overhang a pair of centring collars 13, 14, respective inner and outer, extending towards the intermediate body 8 and within which is positioned the catalyser cartridge 5.

The cap 11 has a diameter that is equal to the outer diameter of the catalyser cartridge and is mounted coaxially with ample radial play between the intermediate body 8 and the second end body 9, coaxially supports in overhang a pair of centring collars 15, 16, respectively inner and outer, wholly identical to the collars 13, 14, also extending towards the intermediate body 8 and within which is positioned the catalyser cartridge 5.

Thanks to this arrangement, the catalyser cartridge 5 is completely closed in sealed fashion by the cap 11.

The radial and axial position of the cap 11 could for example be assured by means of radial tabs - not shown - and by means of an axial tie rod fastened at the ends to the cap 11 and to the collar 13.

The catalyser cartridge 5 internally delimits a cylindrical collection chamber 17 in which are collected the exhaust gases coming from the inlet 3 and externally, jointly with the intermediate body 8, an annular collection chamber 18, which completely surrounds the catalyser means 5, and communicates with the outlet 4 and into which flow the purified exhaust gases which have radially traversed the catalyser means 5.

In particular, the catalyser cartridge 5 comprises a basket 19 formed by two rigid metallic tubular meshes 20, 21, respectively external and internal, coaxial to the axis A and preferably obtained by stretching stainless steel plates of the type capable to withstand high temperatures, and a tubular mat 22 interposed between the two meshes 20, 21.

The mat 22 comprises multiple annular layers 24 comprising silica fibres (Si02) with a degree of purity of 99%, preferably 99.99%, catalysed with iridium in combination with platinum and/or palladium.

The silica fibre constituting the annular layer 24 - as stated previously - is obtained by directly melting highly pure silica and not by chemically washing the silica fibre. By way of example, a silica fibre usable within the present invention is the one marketed by the company Saint Gobain Quartz S.A.S. (France) with the code Quartzel Wool (No. 16011005).

The quantity of iridium, with which the silica fibre is catalysed, is preferably greater than about 0.000013 g/g fibre; iridium is preferably present in a quantity ranging between about 0.0005 and about 0.014 g/g fibre, more preferably between 0.0010 and about 0.012 g/g fibre.

The quantity of palladium and/or platinum is preferably greater than about 0.005 g/g fibre; preferably, palladium and platinum are present in a quantity ranging between about 0.010 and about 0.030 g/g fibre, more preferably between 0.010 and about 0.020 g/g fibre.

The path of the exhaust gases from the inlet 3 to the outlet 4 of the device 1 is shown in Figure 1 by arrows indicated with the reference P. In particular, the exhaust gases are inserted into the device 1 through the inlet 3, reach the internal collection chamber 17 of the catalyser cartridge 5 traversing the hole 12 of the cap 10. The exhaust gases then expand, radially traversing the catalyser cartridge 5, arriving thus purified at the external collection chamber 18, and lastly flow outside the device 1 through the outlet 4.

Naturally, without altering the principle of the invention, the construction details and the embodiments may be widely varied relative to what is described and illustrated herein, without thereby departing from the scope of the present invention.

## Claims

1. Device (1) for reducing the polluting substances present in the exhaust gases of an internal combustion engine, comprising a case (2) provided with an inlet (3) and with an outlet (4) for the exhaust gases, and a catalyser cartridge (5), housed in said case (2), between said inlet (3) and said outlet (4), and traversed, in use, by the exhaust gases; **characterised in that** said catalyser cartridge (5) is constituted by silica fibre with a degree of purity of at least 99%, obtained by directly melting pure SiO₂, catalysed with iridium in combination with platinum and/or palladium.

2. Device as claimed in claim 1, **characterised in that** said catalyser cartridge is constituted by silica fibre with a degree of purity of at least 99.9%, preferably at least equal to 99.99%.

3. Device as claimed in claim 1 or 2, **characterised in that** said silica fibre is catalysed with a quantity of iridium expressed as a percentage in weight relative to the total quantity in weight of platinum and/or palladium ranging 0.1% and 60%.

4. Device as claimed in any of the previous claims, **characterised in that** said silica fibre is catalysed with a quantity of iridium greater than about 0.000013 gr./gr. fibre.

5. Device as claimed in claim 4, **characterised in that** said quantity of iridium is between about 0.0005 and about 0.014 gr./gr. fibre, preferably between 0.0010 and about 0.012 gr./gr. fibre.

6. Device as claimed in any of the previous claims, **characterised in that** said silica fibre is catalysed with a quantity of palladium and/or platinum greater than about 0.005 gr./gr. fibre.

7. Device as claimed in claim 6, **characterised in that** said quantity of platinum and/or palladium is between about 0.010 and about 0.030 gr./gr. fibre, preferably between 0.010 and about 0.020 gr./gr. fibre.
